**Europäisches Patentamt**

(19) **European Patent Office**

**Office européen des brevets**

(11) Veröffentlichungsnummer: **0 059 875**
**B1**

(12) # EUROPÄISCHE PATENTSCHRIFT

(45) Veröffentlichungstag der Patentschrift:
**13.02.85**

(51) Int. Cl.⁴: **A 61 C 19/04**

(21) Anmeldenummer: **82101357.0**

(22) Anmeldetag: **23.02.82**

(54) **Gingivatest-Gerät mit variabler Feder-Last-Einstellung.**

(30) Priorität: **07.03.81 DE 3108661**

(43) Veröffentlichungstag der Anmeldung:
**15.09.82 Patentblatt 82/37**

(45) Bekanntmachung des Hinweises auf die Patenterteilung:
**13.02.85 Patentblatt 85/7**

(84) Benannte Vertragsstaaten:
**AT CH DE FR IT LI**

(56) Entgegenhaltungen:
**DD - A - 72 109**
**DE - B - 2 452 578**
**DE - U - 7 821 583**
**US - A - 4 203 223**

(73) Patentinhaber: **Dr. Karl Thomae GmbH, Postfach 1755,
D-7950 Biberach (Riss) (DE)**

(72) Erfinder: **Schwartz, Hans, Am Hang 2,
D-7951 Warthausen 1 (DE)**
Erfinder: **Steiner, Ferdinand, Englertswiesen 5,
D-7951 Hochdorf (DE)**
Erfinder: **Neumann, Günther, Talfeldstrasse 53,
D-7950 Biberach 1 (DE)**
Erfinder: **Papendick, Uwe, Dr.,
Richard-Wagner-Strasse 6, D-7951 Ummendorf (DE)**

## Beschreibung

Die Erfindung betrifft ein Gingivatest-Gerät mit variabler Feder-Last-Einstellung.

Erkrankungen des Zahnhalteapparates, des Zahnfleischsaumes sowie des Zahnfleisches (Gingiva) und der benachbarten Mundhöhlen-Schleimhaut im Bereich der Kiefer äußern sich überwiegend, Erkrankungen und Folgezustände mangelnder Zahnpflege äußern sich häufig in entzündlichen Veränderungen der Gingiva. Typische Kennzeichen einer Entzündung sind die vermehrte Wärme, der Schmerz, die verstärkte Rötung, die Schwellung (und die gestörte Funktion) im Bereich der Entzündung. Mit geeigneten, teilweise recht aufwendigen Methoden wie Spezialthermometern und exakten Farbbestimmungen unter standardisierten Lichtbedingungen sind die Temperatur- und Farbveränderungen im Bereich der entzündlich veränderten Schleimhaut zu messen; die exakte Beurteilung der Schwellung stößt hingegen bereits auf größere Schwierigkeiten, da bei individuell äußerst unterschiedlichen Krümmungsradien der Oberflächen der Schleimhaut im Bereich der Kiefer die Bezugsebene schwer bestimmbar ist und so eine naturwissenschaftlich exakte Beurteilung praktisch unmöglich ist. Der Schmerz als subjektive Empfindung entzieht sich völlig einer definierbaren und vergleichbaren Skalierung. Entzündungen der Gingiva, insbesondere des Zahnfleischsaumes, besitzen in der Zahnmedizin jedoch einen hohen pathognomischen Wert. Frühzeitig war man daher um eine möglichst objektive Beurteilung der Entzündungsvorgänge bemüht. Hierfür nutzte man eine Eigenart des Zahnfleischsaumes: Die entzündlich veränderte Gingival-Schleimhaut neigt nach Druckbelastung zu subepithelialen Blutungen, wobei sich der zur Auslösung der subepithelialen Blutung notwendige Druck umgekehrt proportional zur ödematösentzündlichen Veränderung verhält. Gesundes Zahnfleisch neigt auch bei Belastungen, die weit über den erträglichen Schmerzpunkt hinausgehen, nicht zu Blutaustritt aus Gefäßen im subepithelialen Bereich.

Stromatologische Tests werden aus zahnmedizinischer Sicht benötigt für

— zahnärztliche Kontrolle mundhygienischer Anordnungen bei Kindern und Erwachsenen im Verlauf zahnärztlicher, insbesondere kieferorthopädischer Therapie-Maßnahmen;
— Kontrolle des Zahnfleisch-Status und der Plaque-Ausdehnung am Zahn und, bedingt, an der Gingiva zur Motivation des Patienten zur Durchführung angeordneter mundhygienischer Maßnahmen;
— Objektive und reproduzierbare Bestimmung des Gingiva-Status im Verlauf von Reihenuntersuchungen, z. B. bei schulzahnärztlichen Aktionen;
— Erstellen des Gingiva-Status zur Beurteilung eingesetzter zahnärztlicher Therapie-Methoden bzw. verordneter zahn- und mundhöhlenhygienischer medikamentöser und/oder mechanischer Behandlungen;
— Objektive Beurteilung von Therapie-Erfolgen im Rahmen von Arzneimittel-Prüfungen.

Der Entzündungszustand der Gingiva wurde bisher mit Hilfe einer Reihe von Tests beurteilt, bei denen die Blutungsneigung im Gingiva-Gewebe bestimmt wird. Es wird letztlich die Reaktion des ödematös-entzündlich veränderten Zahnfleisches auf verschiedene Drucke oder andere mechanische Belastungen (Reibung) durch subepitheliale punktförmige Blutungen bzw. Streifen- oder Flächenblutungen beurteilt. Zunächst wurden zur Druckerzeugung entweder die Fingerbeere oder eine stumpfe auf das Zahnfleisch aufgedruckte Sonde (Knopfkanüle) verwendet. Mit diesen Methoden konnten keine definierten Drucke erzeugt werden. Um die Druckbelastungen zu objektivieren bzw. diese quantitativ zu bestimmen, wurden Federdruck-Geräte, Instrumente mit Gewichtsbelastung oder elektromechanische Druckgeräte gebaut. Alle diese bekannt gewordenen Instrumente zur objektiven Bestimmung der Druckempfindlichkeit des Zahnfleisches sind sehr aufwendig konstruiert und lassen sich nur mühsam oder unvollkommen sterilisieren. Ein Fortschritt war das Stomatest-Gerät »WINKLMAIR« (DE-U 7 821 583), das gut zu sterilisieren und, verglichen mit anderen Testgeräten, gut anwendbar war und ausreichend exakte Werte lieferte. Nachteilig bei dem Gerät waren die etwas umständliche Gewichtsveränderung (durch unterschiedliche Gewichte wurde eine unterschiedliche Belastung erzielt) und die im Hinblick auf die Gewinnung reproduzierbarer Werte möglichst senkrechte Anwendung des Systems; das Gerät konnte nicht lageunabhängig eingesetzt werden. Die DD-A 72 109 beschreibt ein Gerät zur objektiven Blutungsneigungsbestimmung der Mundschleimhaut. Der aufgewendete Druck ist in jeder Arbeitsphase und auch nach dem Arbeitsgang durch einen vorgesehenen Schleppzeiger ablesbar. Nachteilig wirkt sich bei diesem Gerät aus, daß die Meßwerte durch die übliche Kraft-Weg-Abhängigkeit der direkt belasteten Feder verfälscht werden. Es ergab sich deshalb das Ziel, ein Gerät zu entwickeln, welches sich lageunabhängig einsetzen läßt, so daß auch das Gingiva-Gewebe im Bereich der Backenzähne untersucht werden kann, des weiteren sollte die Druckbelastung nicht durch Materialeigenschaften der Feder beeinträchtigt werden und kontinuierlich über einen größeren Bereich regelbar sein, im übrigen muß die gute Sterilisierbarkeit der mit der Mundschleimhaut in Berührung kommenden Teile gewährleistet bleiben.

Erfindungsgemäß läßt sich dieses Ziel dadurch erreichen, daß ein Stempel, der auf das Zahnfleisch aufgesetzt wird, mit konstanter Kraft in seiner Längsachse, unabhängig von der Lage des Meßgerätes, verschiebbar ist. Dies geschieht durch das Wirksamwerden einer definierten Reibungskraft. Die Größe der Reibungskraft ist abhängig von dem Anpreßdruck von Bremselementen, z. B. Bremsbacken, auf diese Längsachse. Der Anpreßdruck wurde durch Vorspannung einer Feder erzeugt und kann durch Änderung der Vorspannung der Feder proportional geändert werden. Die Größe der so eingestellten Kraft wird durch eine geeignete Skala, die z. B. hinter einem Sichtfenster angebracht ist, angezeigt werden. Durch geeignete Vorrichtungen läßt sich die Längsachse nach jedem Meßvorgang auf ihre Meßposition einstellen. Um den medizinischen Erfordernissen entsprechende Messungen auch in schlecht zugänglichen Zahnfleischbereichen, z. B. im molaren, bukkalen Gingivalbereich, vornehmen zu können, muß die Meßkraft gegebenenfalls umgelenkt werden. Die Umlenkung erfolgt durch einen gekröpften Druckübertragungsmechanismus nach dem Prinzip der schiefen Ebene.

Die Kraft wird mit Hilfe eines Abtaststiftes, der am Ende der Längsachse aufgesetzt wird, über einen Kegel (schiefe Ebene), z. B. um 90°, umgelenkt. Die Beibehaltung der eingestellten Meßkraft wird durch die Reibungskoeffizienten und den Kegelwinkel bestimmt.

Gegenstand der Erfindung ist also ein Gingivatestgerät mit variabler Feder-Last-Einstellung und welches wie im Anspruch 1 angegeben gekennzeichnet ist.

Eine konkrete Ausführungsform des Gegenstands der Erfindung besteht beispielsweise aus den folgenden Elementen: Eine Längsachse, an deren einem Ende die Meßsonde direkt oder über ein Winkelstück zur Kräfteumlenkung aufgesetzt werden kann, wird durch Führungsbuchsen axial in einem als Gerätehandstück dienenden Gehäuse geführt. Eine Feder, beispielsweise eine Druckfeder, wirkt axial auf ein Bremssystem, bestehend beispielsweise aus Bremsbacken, die mit ihrem Anpreßdruck auf die Längsachse einwirken. Die über die Bremselemente wirkenden Kräfte gewährleisten eine, über den gesamten Meßbereich konstant bleibende Reibung auf die Längsachse, damit bleibt der Anpreßdruck in jeder Phase des Meßvorgangs konstant. Die indirekte Übertragung der Federkraft über die Bremselemente auf die Längsachse eliminiert die übliche Kraft-Weg-Abhängigkeit der Feder, wie diese bei einer direkten Belastung der Feder auftreten würde. Die Vorspannung der Feder kann proportional oder abgestuft eingestellt werden, beispielsweise über Gewindebuchsen oder Rastelemente. Bei Änderung der Federvorspannkraft wird eine bewegliche Skala gleichzeitig an einem Sichtfenster vorbeigeführt und somit der Meßwert direkt ablesbar. Nach jedem Meßvorgang wird die Längsachse in die Ausgangsstellung gebracht, beispielsweise durch ein gefedertes Druckknopfsystem, das bei Betätigung mit dem anderen Ende der Längsachse in Kontakt gebracht wird.

Eine vorteilhafte Ausführungsform des Gegenstands der Erfindung sieht vor, daß im Bereich der Bremselemente die Längsachse auf einem bestimmten Bereich in einer bestimmten Länge verjüngt ist, wodurch der Meßvorgang schlagartig beendet wird, und zwar bevor der Anschlag der Längsachse erreicht wird und die Übertragung unkontrollierter Kräfte erfolgt. Die Verjüngung kann stufenförmig oder kontinuierlich (z. B. konisch) erfolgen.

Das für Messungen in bestimmten Mundregionen erforderliche Winkelstück wird auf das Handstück aufgesetzt und z. B. mit Schraubverschluß oder Preßsitz festgehalten. Zuvor wird die Meßsonde gegen einen kugelförmigen oder konisch geformten Abtaststift ausgetauscht. In dem Winkelstück befindet sich eine zylindrisch geführte Aufnahmeachse für die Aufnahme der Meßsonde, wobei die Aufnahmeachse im Eintrittsbereich des Abtaststiftes kegelförmig ausgeführt ist.

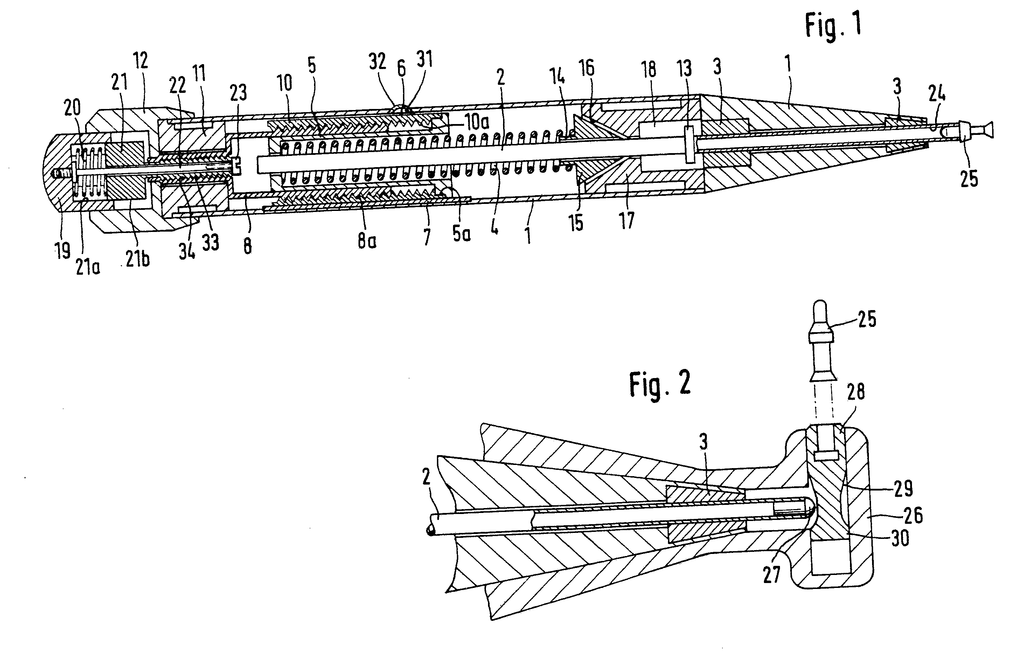

Die Fig. 1 und 2 sollen, als beispielshafte Ausführungsformen, das Wesen der Erfindung verdeutlichen.

Die Fig. 1 zeigt einen Längsschnitt durch ein Stromatestgerät ohne Kraftumlenkung.

Die Fig. 2 zeigt einen Längsschnitt durch das aufsteckbare Winkelstück zur Umlenkung der Meßkraft.

Die Fig. 1 und 2 sollen im folgenden näher erläutert werden:

In einem Gehäuse (1) befindet sich die Längsachse (2), die durch Führungsbuchsen (3) geführt wird. Eine Spiralfeder (4) liegt an der Längsachse (2) an, sie wird gehalten durch eine Haltebuchse (5); die Haltebuchse (5) ist durch einen Preßsitz (5a) mit einer Gewindebuchse (10) mit Innengewinde (10a) verbunden. Die Gewindebuchse (10) ist axial bewegbar entlang dem Außengehäuse (1). Eine Gewindespindel (8), die axial fixiert aber radial verdrehbar ist, trägt ein Außengewinde (8a) zum Eingriff in das Innengewinde (10a) der Gewindebuchse (10). Eine Gleitlagerbuchse (11) dient zur Führung der Gewindespindel (8). Die Gewindebuchse (10) wird durch einen Führungskeil (7) gegen radiale Verdrehung gesichert. Im Bereich eines Sichtfensters (31) im Gehäuse (1) liegt außenseitig an der Oberfläche der Gewindebuchse (10), gegenüber dem Sichtfenster, eine Skala (6) an.

Durch Drehen der Gewindespindel (8) wird über das Gewinde (8a/10a) die Gewindebuchse (10) in axialer Richtung bewegt; somit wird, da die Haltebuchse (5) an der Gewindebuchse (10) durch Preßsitz (5a) fest anliegt, die Feder (4) entweder gespannt oder entspannt.

Ein Drehknopf (12) ist mit der Gewindespindel (8) fest verbunden, beispielsweise durch einen Vierkant oder Sechskant. Die Längsachse (2) wird durch einen Anschlag bzw. Bund (13) in ihrer Längsbewegung begrenzt. Die Feder (4) sitzt auf den, einen Bund (14) bildenden Bremsbacken (15) auf, der Bund wird normalerweise durch 3 oder 4 Bremsbacken gebildet. Die Bremsbacken (15) liegen in einem Innenkegel (16) eines Gegenlagers (17). Der Bund (13) bewegt sich in dem Innenraum (18) des Gegenlagers (17). Die Bremsbacken liegen innerseitig an der Längsachse (2) an.

Ein gefedertes Druckknopfsystem bringt die Längsachse in ihre Meßposition. Dieses Druckknopfsystem besteht aus einem Druckknopf (19), der auf seiner Innenseite einen Innensechskant (21a) aufweist. Eine Befestigungsschraube (21), die auch zur Führung des Drehknopfes (12) dient, weist einen Außensechskant (21b) zum Eingriff in den Innensechskant (21a) des Druckknopfes (19) auf, durch ein Außengewinde (33) am Schaft der Befestigungsschraube (21) wird der Drehknopf (12) befestigt. Die Befestigungsschraube (21) besitzt eine durchgehende, zentrale Bohrung, durch die eine Führungsachse (22) durchtritt, wobei diese Führungsachse (22) an ihrem einen Ende mit dem Druckknopf (19) durch Gewindeeinrichtungen verschraubbar ist, an ihrem anderen Ende ein Innengewinde besitzt, in das eine Schraube (23) eingedreht wird, wobei der Schaft der Befestigungsschraube (21) an dieser Schraube (23) aufsitzt. Der Schaft der Befestigungsschraube (21) greift mit seinem Außengewinde (33) in das Innengewinde (34) der Gewindespindel (8) ein. Eine Feder (20) wird zwischen der Befestigungsschraube (21) und dem Druckknopf (19) untergebracht. Bei Betätigung des Druckknopfes (19) drückt die Schraube (23) auf die Längsachse (2). Der nach außen verlaufende Teil der Längsachse (2) hat eine Aufnahmebohrung (24) zum Einstecken einer Meßsonde (25).

In der Fig. 2 ist (2) die Längsachse, die den Abtaststift (27) aufnimmt. Im Winkelstück (26) wird die Längsachse (2) durch eine Buchse (3) geführt. In dem Winkelstück (26) sitzt eine zylindrisch geführte Aufnahmeachse (28) mit einer kegelförmigen Ausgestaltung (29), in die der Abtaststift (27) eingreift; der Bund (30), der an den Konus (29) anliegt, dient zur besseren Längsführung der Aufnahmeachse (28). Die Meßsonde (25) ist in der Aufnahmeachse (28) fixierbar, z. B. über eine Nut, bzw. gegebenenfalls einsteckbar angebracht.

**Patentansprüche**

1. Gingivatestgerät mit variabler Feder-Last-Einstellung bestehend aus einem Gehäuse (1) und einer darin sich befindenden Längsachse (2), an deren aus dem Gehäuse (1) austretenden Ende eine Meßsonde (25) oder ein Winkelstück (26) zur Kraftumlenkung auswechselbar fixiert ist, wobei die Längsachse durch Führungselemente (3) gehalten wird, dadurch gekennzeichnet, daß eine Feder (4) axial auf ein Bremssystem, vorzugsweise auf Bremsbacken (15) einwirkbar angeordnet ist, das Bremssystem im Eingriff auf die Längsachse (2) steht, eine Gewindebuchse (10) oder Rastelemente mit der Feder (4) in Verbindung stehen und eine Skala (6) die Federkraft ablesbar macht und, gegebenenfalls, ein Kegel (29) in einem Winkelstück (26) zur Kraftumlenkung vorgesehen ist.

2. Gingivatestgerät mit variabler Feder-Last-Einstellung gemäß Anspruch 1, bestehend aus einem Gehäuse (1), einer Längsachse (2), die durch Führungen (3) gehalten wird, dadurch gekennzeichnet, daß an der Längsachse (2) eine Spiralfeder (4) innerhalb einer Haltebuchse (5) anliegt, die Haltebuchse (5) mit einer Gewindebuchse (10), die axial zum Gehäuse (1) bewegbar ist, im Eingriff steht, eine Gewindespindel (8), die axial fixiert aber radial verdrehbar ist, über ein Außengewinde (8a) im Eingriff mit einem Innengewinde (10a) der Gewindebuchse (10) steht, die Gewindebuchse (10) durch Führungselemente (7) gegen radiale Verdrehung abgesichert ist, so daß beim Drehen der Gewindespindel (8) mittels des Gewindes (8a/10a) die Gewindebuchse (10) und mit dieser die Haltebuchse (5) in axialer Richtung bewegbar wird, wodurch die Feder (4) gespannt oder entspannt wird, ein Drehknopf (12) mit der Gewindespindel (8) fest verbunden ist, die Längsachse (2) durch einen Anschlag (13) in ihrer Längsbewegung begrenzt ist, die Feder (4) auf, einen Bund (14) bildenden Bremsbacken (15) aufsitzt, die Bremsbacken (15) in einem Innenkegel (16) eines Gegenlagers (17) angeordnet sind und dort innerseitig an der Längsachse (2) anliegen, der Bund (13) sich in dem Innenraum (18) eines Gegenlagers (17) befindet, ein gefedertes Druckknopfsystem die Längsachse in ihre Meßposition bringt, dieses Druckknopfsystem aus einem Druckknopf (19), einer in dem Innenraum des Druckknopfes axial gleitbaren oder dort nicht verdrehbaren Befestigungsschraube (21) mit einem Schaft zur Führung des Drehknopfes (12) mit einer durchgehenden zentralen Bohrung, und einer durch diese Bohrung gehenden Führungsachse (22) besteht, wobei die Führungsachse einerseits mit dem Druckknopf (19) fixierbar ist und andererseits eine Vorrichtung (33), vorzugsweise in Form einer Schraube, zur Begrenzung des Schaftes der Befestigungsschraube (21) aufweist und der Schaft der Befestigungsschraube (21) mit der Gewindespindel (8) über Gewinde (33/34) verbunden ist und eine Feder (20) zwischen der Befestigungsschraube (21) und dem Druckknopf (19) untergebracht ist und der aus dem Gehäuse (1) austretende Teil der Längsachse (2) eine Aufnahmebohrung (24) zum Einstecken einer Meßsonde (25) aufweist und die Gewindebuchse (10) gegenüber einem Sichtfenster (31) im Gehäuse (1) eine Skala (6) trägt.

3. Gingivatestgerät nach Anspruch 1 und 2, dadurch gekennzeichnet, daß ein Winkelstück (26) auf das Unterteil des Gehäuses (1) aufsteckbar ist und im Winkelstück (26) die Längsachse (2) beispielsweise durch Buchsen (3) gelagert ist, im Winkelstück (26) eine zylindrisch geführte Aufnahmeachse (28) mit einer kegelförmigen Ausgestaltung (29) untergebracht ist, wobei ein Abtaststift (27) im Kegelbereich eingreift, die Aufnahmeachse durch Elemente (30) geführt wird und an ihrem äußeren Ende eine auswechselbare Meßsonde (25) trägt.

4. Gingivatestgerät nach Anspruch 1, 2 und 3, dadurch gekennzeichnet, daß im Bereich der Bremselemente (15) die Längsachse (2) eine Verjüngung aufweist.

**Claims**

1. Gingival test apparatus with variable spring load adjustment, consisting of a housing (1) and a longitudinal spindle (2) located therein, whilst at the end of said spindle (2) emerging from the housing (1) a measuring probe (25) or an angle member (26) for deflecting the force is replaceably fixed, the longitudinal spindle being held by guide elements (3), characterised in that a spring (4) is arranged so as to act axially on a braking system, preferably on brake shoes (15), the braking system engages with the longitudinal spindle (2), a threaded sleeve (10) or locking elements are connected to the spring (4) and a scale (6) gives a visible indication of the spring force and, if required, a cone (29) is provided in an angle member (26) for the deflection of forces.

2. Gingival test apparatus with variable spring load adjustment as claimed in claim 1, consisting of a housing (1), a longitudinal spindle (2) held by guide means (3), characterised in that a helical spring (4) inside a retaining sleeve (5) abuts on the longitudinal spindle (2), the retaining sleeve (5) engages with a threaded sleeve (10) which is movable axially relative to the housing (1), a threaded spindle (8) which is axially fixed but radially rotatable engages, via an external thread (8a), with an internal thread (10a) of the threaded sleeve (10), the threaded sleeve (10) is secured against radial rotation by means of guide elements (7), so that, when the threaded spindle (8) is rotated by means of the thread (8a/10a), the threaded sleeve (10) and hence the retaining sleeve (5) are movable in the axial direction, resulting in compression or release of the spring (4), a rotary knob (12) is fixedly connected to the threaded spindle (8), the longitudinal movement of the longitudinal spindle (2) is limited by a stop (13), the spring (4) rests on brake shoes (15) which form a collar (14), the brake shoes (15) are mounted in an internal cone (16) of an abutment (17) and they abut on the longitudinal spindle (2) on the inside, the collar (13) is located in the interior (18) of an abutment (17), a springloaded push button system brings the longitudinal spindle into its measuring position, this push button system consists of a push button (19), a fixing screw (21) which is capable of sliding axially in the interior of the push button or is not rotatable therein, having a shank for guiding the rotary knob (12) with a central through-bore, and a guide spindle (22) passing through this bore, the guide spindel, on the one hand, being fixable with the push button (19) and, on the other hand, comprising means (33), preferably in the form of a screw, for limiting the shank of the fixing screw (21), whilst the shank of the fixing screw (21) is connected to the threaded spindle (8) via threads (33/34) and a spring (20) is accomodated between the fixing screw (21) and the push button (19) and the portion of the longitudinal spindle (2) emerging from the housing (1) has a receiving bore (24) for the insertion of a measuring probe (25) and the threaded sleeve (10) has a scale (6) located opposite an inspection window (31) in the housing (1).

3. Gingival test apparatus as claimed in claims 1 and 2, characterised in that an angle member (26) can be fitted on the lower part of the housing (1) and the longitudinal spindle (2) is mounted in the angle member (26), for example by means of sleeves (3), and a cylindrically extending receiving spindle (28) with a conical configuration (29) is housed in the angle member (26), whilst a sensor pin (27) engages in the conical region, the receiving spindle is guided by elements (30) and has a replaceable measuring probe (25) at its outer end.

4. Gingival test apparatus as claimed in claims 1, 2 and 3, characterised in that the longitudinal spindle (2) has a tapered portion in the region of the brake elements (15).

**Revendications**

1. Appareil d'analyse de la gencive à réglage variable de la charge élastique, constitué par un logement (1) et un axe longitudinal (2) disposé à l'intérieur, une sonde de mesure (25) ou une pièce angulaire (26) qui est fixée de façon amovible en vue de la déviation de la force étant montée à l'extrémité de l'axe longitudinal qui sort du logement (1), l'axe longitudinal étant maintenu par des éléments de guidage (3), caractérisé en ce qu'un ressort (4) est disposé axialement de manière à exercer son effet sur un système de freinage, de préférence des mâchoires de freinage (15), le système de freinage étant en prise avec l'axe longitudinal (2), une douille filetée (10) ou des éléments d'arrêt étant en liaison avec le ressort (4) et une échelle graduée (6) permettant de lire la force élastique, et, éventuellement, un cône (29) étant prévu dans une pièce angulaire (26) en vue de la déviation de la force.

2. Appareil d'analyse de la gencive à réglage variable de la charge élastique selon la revendication 1, constitué par un logement (1) et un axe longitudinal (2) qui est maintenu par des guides (3), caractérisé en ce qu'un ressort hélicoïdal (4) est appliqué contre l'axe longitudinal (2) à l'intérieur d'une douille de retenue (5), la douille de retenue (5) étant en prise avec une douille filetée (10) qui est mobile axialement par rapport au logement (1), une broche filetée (8) qui est fixe en direction axiale mais peut tourner radialement étant en prise par l'intermédiaire d'un filetage externe (8a) avec un filetage interne (10a) de la douille filetée (10), cette douille filetée (10) étant empêchée de tourner radialement par des éléments de guidage (7), ce qui fait que lorsqu'on fait tourner la douille filetée (8) au moyen des filetages (8a, 10a) la douille filetée (10), et avec elle la douille de retenue (5), peut se déplacer en direction axiale, ce grâce à quoi le ressort (4) est tendu ou détendu, une tête de pression rotative (12) étant solidaire de la douille filetée (8), l'axe longitudinal (2) étant limité par une butée (13) dans son mouvement longitudinal, le ressort (4) reposant sur des mâchoires de freinage (15) formant une collerette (14), les mâchoires de freinage (15) étant disposées dans un cône interne (16) d'un contre-support (17) et s'appliquant à cet endroit par leur côté interne contre l'axe longitudinal (2), la collerette (13) se trouvant dans la cavité (18) d'un contre-support (17), un système à tête de pression élastique amenant l'axe longitudinal dans sa position de mesure, ce système à tête de pression étant constitué par une tête de pression (19), une vis de fixation (21) pouvant coulisser axialement dans la cavité de la tête de pression mais ne pouvant pas tourner en cet endroit et comprenant une tige pour le guidage de la tête tournante (12), comportant un elésage central traversant et un axe de guidage (22) passant par cet alésage, l'axe de guidage étant fixé d'une part à la tête de pression (19) et comprenant d'autre part un dispositif (33), de préférence sous la forme d'une vis, pour limiter la tige de la vis de fixation (21), et la tige de la vis de fixation (21) étant reliée à la broche filetée (8) par l'intermédiaire de filetages (33/34) et un ressort (20) étant monté entre la vis de fixation (21) et la tête de pression (19), et la partie de l'axe longitudinal (2) qui sort du logement (1) comprenant un alésage de réception (24) pour l'enfichage d'une sonde de mesure (25) et la douille filetée (10) portant une échelle graduée face à une fenêtre (31) pratiquée dans le logement l.

3. Appareil d'analyse de la gencive selon la revendication 1 et 2, caractérisé en ce qu'une pièce angulaire (26) peut être enfichée sur la partie inférieure du logement (1) et l'axe longitudinal (2) est monté dans la pièce angulaire (26) par exemple au moyen de douilles (3), un axe de réception cylindrique et guidé (28), comportant une partie de forme conique (29), étant monté dans la pièce angulaire (26), une tige de détection (27) pénétrant dans la région conique, l'axe de réception étant guidé par des éléments (30) et portant une sonde de mesure remplaçable (25) à son extrémité extérieure.

4. Appareil d'analyse de la gencive selon la revendication 1, 2 et 3, caractérisé en ce que l-axe longitudinal (2) comprend une partie plus mince dans la région des éléments de freinage (15).

Fig. 1

Fig. 2